# EUROPEAN PATENT APPLICATION

(11) **EP 1 768 397 A2**
(43) Date of publication of application: **28.03.2007**
(21) Application number: 06120320.4
(22) Date of filing: 07.09.2006
(51) Int. Cl.: H04N 5/45, H04N 5/21

(54) **Video Processing Apparatus and Method**

(30) Priority: 15.09.2005 KR 20050086490
(71) Applicant: Samsung Electronics Co., Ltd., Suwon-si, Gyeonggi-Do (KR)
(72) Inventor: SON, Hyun-seok, Gyeonggi-do (KR)
(74) Representative: Clark, Charles Robert

(57) **Abstract**

A video processing apparatus and a video processing method including a display, first and second video processing units for processing a main video signal and a sub video signal, a path switching unit for switching paths of the main video signal and the sub video signal, and a controller for controlling the path switching unit such that the main video signal is first processed in the first video processing unit and is next processed in the second video processing unit when only video according to the main video signal is displayed on the display, and the main video signal and the sub video signal are first processed in the second video processing unit and are next processed in the first video processing unit when videos according to the main video signal and the sub video signal are simultaneously displayed on the display.

## Description

The present invention relates to a video processing apparatus and a video processing method, and more particularly, to a video processing apparatus and a video processing method which are capable of displaying two pictures with high quality together without any additional costs.

A video processing apparatus, such as a TV, receives a video signal carrying a picture, such as a digital TV broadcast signal or a cable TV broadcast signal, from a broadcast station, or receives a video signal from a variety of video devices such as a VCR or DVD player, and performs video processing on the received video signal for video display.

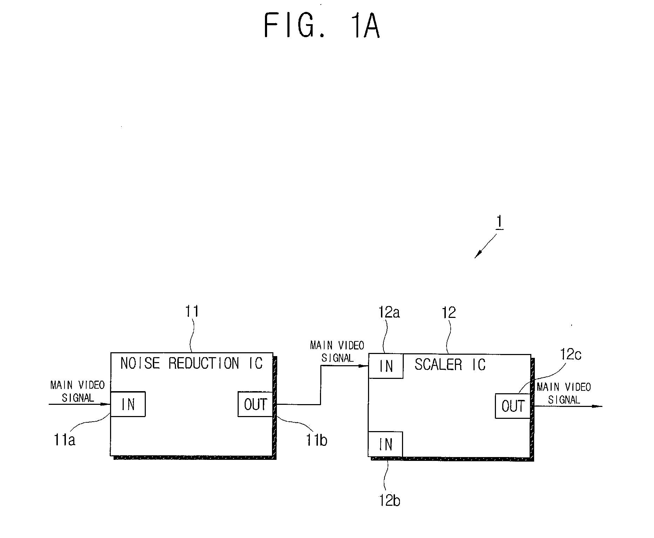

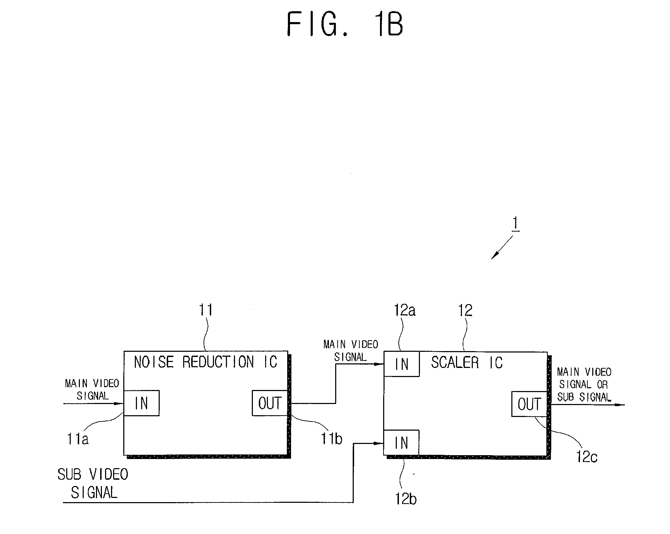

Such a video processing apparatus can display not only a picture corresponding to one channel on one screen but also a plurality of pictures corresponding to a plurality of channels on one screen; this is known as a Picture in Picture (PIP). Figure 1 is a block diagram showing a main configuration of a conventional video processing apparatus with such a PIP function. A video processing apparatus 1 shown in Figure 1 includes a noise reduction IC 11 and a scaler IC 12. The noise reduction IC 11 performs an operation of removing noise contained in an input video signal to improve video quality. The scaler IC 12 adjusts resolution of the video such that the video according to the video signal is displayed in an appropriate scale on a screen. In this case, the noise reduction IC 11 is disposed at the front stage of the scaler IC 12 in a signal flow to maximize the effect of noise reduction.

In the conventional video processing apparatus 1, the noise reduction IC 11 has one input port 11a and one output port 11b through which a video signal is input and output, respectively, and the scaler IC 12 has two input ports 12a and 12b through which two video signals are respectively input, and one output port 12c through which one of the two input video signals is output. The scaler IC 12 selects one of the two video signals input through the two input ports 12a and 12b and scales the selected one according to a control signal based on a selection by a user.

In operation of the conventional video processing apparatus as configured above, as shown in Figure 1a, when the PIP disappears by selection of the user, that is, when only a picture of one channel is displayed, a video signal input to the input port 11a of the noise reduction IC 11 (hereinafter referred to as a "main video signal" for the sake of convenience of explanation) is output to the output port 11b after being subject to noise reduction. The output main video signal is input to the input port 12a of the scaler IC 12 and is output to the output port 12c after being subject to scaling.

In the mean time, as shown in Figure 1b, when the PIP appears by selection of the user, that is, when two video signals (hereinafter referred to as a "main video signal" and "sub video signal" for the sake of convenience of explanation) are displayed together on the screen, the main video signal is output through the noise reduction IC 11 and the scaler IC 12 like the signal flow shown in Figure 1a, while the sub video signal is input to the input port 12b of the scaler IC 12 without passing through the noise reduction IC 11 and is output to the output port 12c after being subject to scaling. The reason why the sub video signal does not pass through the noise reduction IC 11 is that the noise reduction IC 11 has only one input port 11a, and therefore, more than two video signals can not be simultaneously input to the input port 11a.

Accordingly, in the conventional processing apparatus 1, when the PIP appears on the screen, noise in the main video signal, which is passed through the noise reduction IC 11, can be reduced, while noises of the sub video signal, which did not pass through the noise reduction IC 11, cannot be reduced. So, there arises a problem of deterioration of video quality of the sub video signal. Changing a disposition order of the noise reduction IC 11 and the scaler IC 12 for the purpose of overcoming such a problem may lead to decrease of the noise reduction effect. Also, the addition of a new noise reduction IC or increase of the number of input ports of the noise reduction IC 11 may lead to increase of product costs.

To address the above problems, it is an aim of the present invention to provide a video processing apparatus and a video processing method, which are capable of displaying two pictures with high quality together. The present invention aims to achieve this without incurring any additional costs.

Accordingly, there is provided a video processing apparatus comprising a display, first and second video processing parts that processes a main video signal and a sub video signal, a path switching part that switches paths of the main video signal and the sub video signal, and a controller that controls the path switching part such that the main video signal is first processed in the first video processing part and is next processed in the second video processing part if only video according to the main video signal is displayed on the display, and the main video signal and the sub video signal are first processed in the second video processing part and are next processed in the first video processing part if videos according to the main video signal and the sub video signal are simultaneously displayed on the display.

According to an aspect of the present invention, the first video processing part can comprise one input port through which the main video signal or the sub video signal is input and one output port through which the main video signal or the sub video signal is output, and wherein the second video processing part comprises two input ports through which the main video signal and the sub video signal are input and one output port through which at least one of the main video signal and the sub video signal is output.

According to an aspect of the present invention, the controller can control the second video processing part such that at least one of the main video signal and the sub video signal is output.

According to an aspect of the present invention, the first video processing part can remove noise from at least one of the main video signal and the sub video signal.

According to an aspect of the present invention, the second video processing part can adjust resolution of the main video signal and the sub video signal to be displayed on the display.

According to an aspect of the present invention, the video processing apparatus can further comprise the display.

Furthermore, there is provided a video processing method for a video processing apparatus comprising first and second video processing units which process a main video signal and a sub video signal, the method comprising: determining which of the main video signal and the sub video signal is displayed on a display; first processing the main video signal in the first video processing unit and next processing the main video signal in the second video processing unit if it is determined that only video according to the main video signal is displayed on the display, whereas first processing the main video signal and the sub video signal in the second video processing unit and next processing the main video signal and the sub video signal in the first video processing unit if it is determined that videos according to the main video signal and the sub video signal are simultaneously displayed on the display.

According to an aspect of the present invention, the first video processing unit can comprise one input port through which the main video signal or the sub video signal is input and one output port through which the main video signal or the sub video signal is output, and wherein the second video processing unit comprises two input ports through which the main video signal and the sub video signal are input and one output port through which at least one of the main video signal and the sub video signal is output.

According to an aspect of the present invention, the second video processing unit can output at least one of the main video signal and the sub video signal.

According to an aspect of the present invention, the first video processing unit can remove noise from at least one of the main video signal and the sub video signal.

According to an aspect of the present invention, the second video processing unit adjusts resolution of the main video signal and the sub video signal to be displayed on the display.

According to an aspect of the present invention, the video processing apparatus further comprises the display.

Embodiments of the present invention are now described by way of example, with reference to the accompanying drawings of which:
Figure 1 is a schematic block diagram showing a main configuration of a conventional video processing apparatus with a PIP function;
Figure 2 is a schematic block diagram showing configuration of a video processing apparatus according to an embodiment of the present invention;
Figure 3 is a view showing a flow of a video signal in ON/OFF operation of PIP of a video processing apparatus according to an embodiment of the present invention; and
Figure 4 is a schematic flow chart illustrating an operation of a video processing apparatus according to an embodiment of the present invention.

Reference will now be made in detail to embodiments of the present invention, examples of which are illustrated in the accompanying drawings.

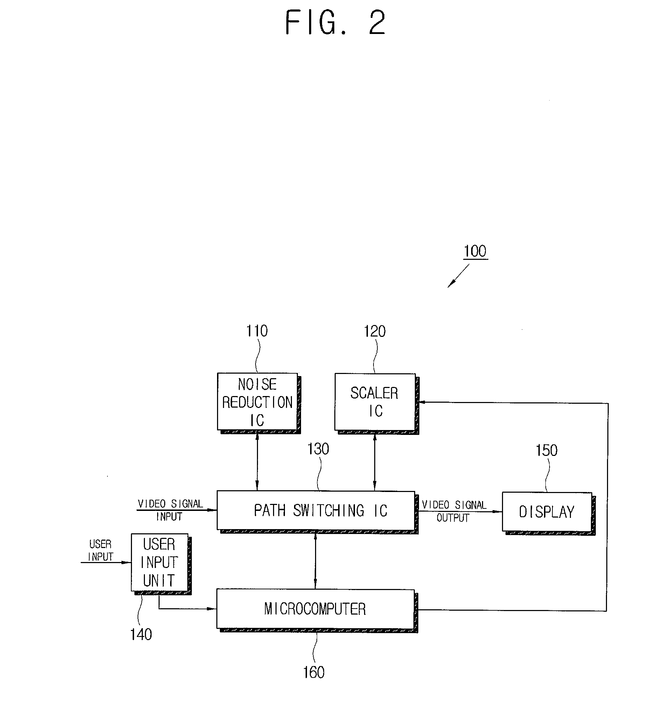

Figure 2 is a schematic block diagram showing configuration of a video processing apparatus 100 according to an exemplary embodiment of the present invention. The video processing apparatus 100 according to this embodiment receives a video signal carrying a picture, such as a digital TV broadcast signal or a cable TV broadcast signal, from a broadcast station or receives a video signal from a variety of video devices such as a VCR or DVD player, and performs video processing on the received video signal for video display. The video processing apparatus 100 may be implemented as a TV system, a TV set-top box or the like.

The video processing apparatus 100 can display a plurality of pictures corresponding to a plurality of channels on one screen; this function is called a PIP (Picture In Picture). As shown in Figure 2, the video processing apparatus 100 includes a noise reduction IC 110, a scaler IC 120, a path switching IC 130, a user input unit 140, a display 150 and a microcomputer 160. The noise reduction IC 110 performs an operation of removing noise contained in an input video signal to improve video quality. The scaler IC 120 adjusts resolution of the video such that the video according to the video signal is displayed in an appropriate scale on a screen of the display 150. The path switching IC 130 is disposed in a path of the video signal and performs an operation of switching the path based on a control signal of the microcomputer 160. The user input unit 140 receives information from a user and transmits the received information to the microcomputer 160. The user input unit 140 may be implemented as a remote controller or the like. The display 150 may be implemented as a CRT, LCD and the like and displays pictures on the screen based on the video signal. The microcomputer 160 controlling the overall operation of the video processing apparatus 100 determines the path of the video signal based on an input from the user and controls the path switching IC 130 such that the video signal flows along the determined path.

The path switching IC 130 receives the video signal and transmits the received video signal to the noise reduction IC 110 and the scaler IC 120, based on the control signal of the microcomputer 160. The video signal is processed by the noise reduction IC 110 and the scaler IC 120, is transmitted to the path switching IC 130 and then is displayed on the display 150.

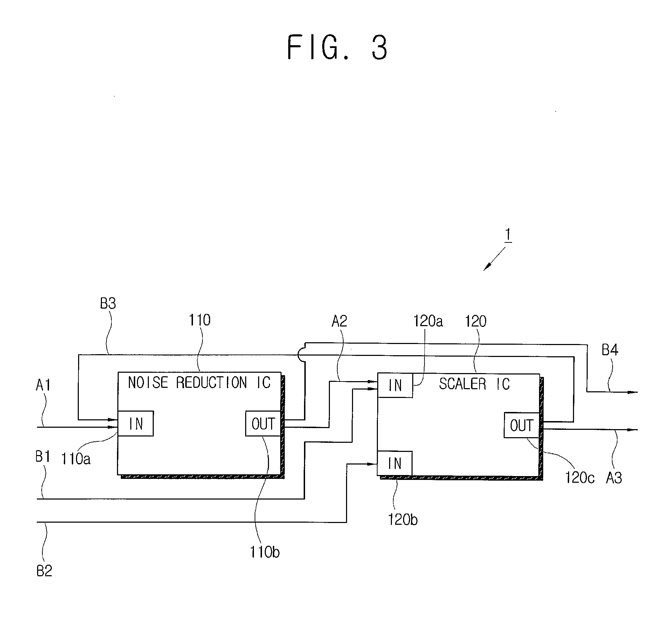

Figure 3 is a view showing a flow of a video signal in ON/OFF operation of PIP of the video processing apparatus 100 according to an embodiment of the present invention. The noise reduction IC 110 according to this embodiment has one input port 110a and one output port 110b through which a video signal is input and output, respectively, and the scaler IC 120 has a first input port 120a and a second input port 120a through which two video signals are respectively input and one output port 120c through which at least one of the input two video signals is output. The scaler IC 120 selects one of the two video signals input through the first and second input ports 120a and 120b and scales the selected one based on the control signal of the microcomputer 160.

For the purpose of convenience of explanation, a video signal in the OFF operation of the PIP of the video processing apparatus 100 is referred to as a "main video signal" and two video signals in the ON operation of the PIP of the video processing apparatus 100 are referred to as a "main video signal" and a "sub video signal", respectively.

In the OFF operation of the PIP as selected by the user, the microcomputer 160 controls the path switching IC 130 such that the main video signal is input to the input port 110a of the noise reduction IC 110 (see A1 in Figure 3) and is output to the output port 110b after being subject to noise reduction (see A2 in Figure 3), then, the output main video signal is input to the first input port 120a of the scaler IC 120 (see A2 in Figure 3) and is output to the output port 120c after being subject to scaling (see A3 in Figure 3). In other words, in the video processing apparatus 100, if the OFF operation of the PIP is performed, the main video signal is first processed in the noise reduction IC 110 and is next processed in the scaler IC 120. Only a single picture is displayed in this operation.

In the ON operation of the PIP (by selection of the user), the microcomputer 160 controls the path switching IC 130 such that the main video signal and the sub video signal are input to the first input port 120a and the second input port 120b of the scaler IC 120, respectively (see paths B1 and B2 in Figure 3), the main video signal or the sub video signal output to the output port 120c after being subject to scaling is input to the input port 110a of the noise reduction IC 110 (see path B3 in Figure 3), and the main video signal or the sub video signal output to the output port 110b after being subject to noise reduction is output to the display 150 (see path B4 in Figure 3). In other words, if the ON operation of the PIP is performed, the main video signal or the sub video signal is first processed in the scaler IC 120 and is next processed in the noise reduction IC 110. Then, the other of the main video signal or sub video signal is processed in the scaler and the noise reduction ICs, respectively. Each of the main video or sub video signals can be processed in turn by the scaler IC and the noise reduction IC.
The noise reduction IC 110, the scaler IC 120 and the path switching IC 130 according to an embodiment may be implemented by one integrated circuit or may be implemented separately or by a combination thereof. The microcomputer 160 may be implemented by a microprocessor and computer program executed thereby. In this case, the computer program may be stored in a flash memory or the like. The computer program is programmed by a language appropriate for the microprocessor such that the microcomputer 160 operates properly.

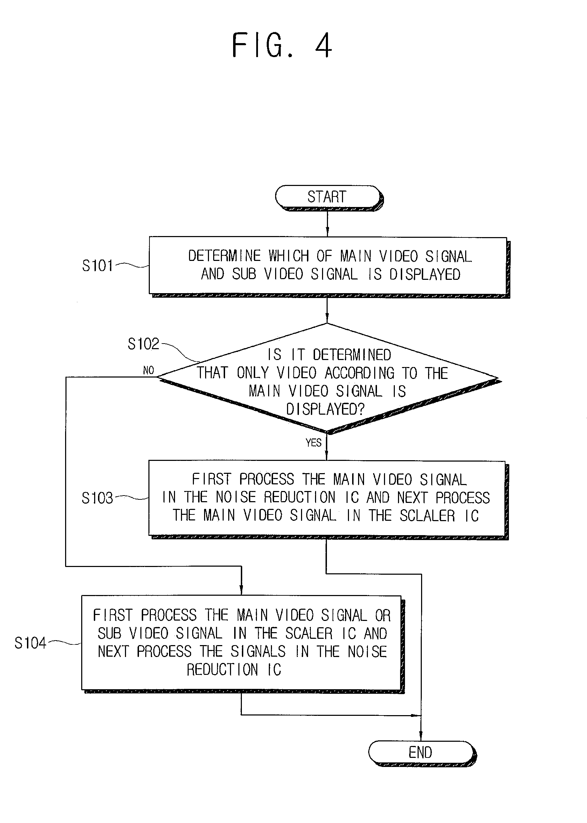

Figure 4 is a schematic flow chart illustrating an operation of a video processing apparatus 100 according to an embodiment of the present invention. First, by the user's input through the user input unit 140, the microcomputer 160 determines which of the main video signal and the sub video signal is displayed on the display 150(S101). If it is determined that only video according to the main video signal is displayed on the display 150(S102), the microcomputer 160 controls the path switching IC 130 such that the main video signal is first processed in the noise reduction IC 110 and is next processed in the scaler IC 120(S103). If it is determined at S102 that videos according to the main video signal and the sub video signal are simultaneously displayed on the display 150, the microcomputer 160 controls the path switching IC 130 such that the main video signal or the sub video signal is first processed in the scaler IC 120 and is next processed in the noise reduction IC 110(S104).

As apparent from the description, the present invention provides a video processing apparatus and a video processing method, which are capable of displaying two pictures with high quality together without any additional costs.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A video processing apparatus comprising:
first and second video processing means for processing a main video signal and a sub video signal; and
switching means for switching paths of the main video signal and the sub video signal;
wherein,
when only the main video signal is selected for display the main video signal is first processed in the first video processing means and is next processed in the second video processing means, and
when the main video signal and the sub video signal are selected for simultaneous display , the main video signal and the sub video signal are first processed in the second video processing means and are then processed in the first video processing means.

2. The video processing apparatus according to claim 1, wherein the first video processing means comprises one input port through which the main video signal or the sub video signal is input and one output port through which the main video signal or the sub video signal is output, and
wherein the second video processing means comprises a first and a second input port through which the main video signal and the sub video signal are input respectively, and one output port through which at least one of the main video signal and the sub video signal is output.

3. The video processing apparatus according to claim 1 or 2, further comprising a control means for controling the second video processing unit such that at least one of the main video signal and the sub video signal is output.

4. The video processing apparatus according to any of claims 1, 2 or 3, wherein the first video processing means is arranged to remove noise from at least one of the main video signal and the sub video signal.

5. The video processing apparatus according to any preceding claim, wherein the second video processing means is arranged to adjust resolution of the main video signal and the sub video signal.

6. The video processing apparatus according to claim 1, further comprising a display arranged to display a video signal.

7. A video processing method for a video processing apparatus comprising first and second video processing means arranged to process a main video signal and a sub video signal, the method comprising:
determining which of the main video signal and the sub video signal is displayed on a display; and either,
when it is determined that only video according to the main video signal is to be displayed on the display, first processing the main video signal in the first video processing means and then processing the main video signal in the second video processing means, or
when it is determined that videos according to the main video signal and the sub video signal are to be simultaneously displayed on the display, first processing the main video signal and the sub video signal in the second video processing means and next processing the main video signal and the sub video signal in the first video processing means.

8. The video processing method according to claim 7, wherein the first video processing means comprises one input port through which the main video signal or the sub video signal is input and one output port through which the main video signal or the sub video signal is output, and
wherein the second video processing means comprises two input ports through which the main video signal and the sub video signal are input and one output port through which at least one of the main video signal and the sub video signal is output.

9. The video processing method according to claim 7 or 8, wherein the second video processing means outputs at least one of the main video signal and the sub video signal.

10. The video processing method according to claim 7, 8 or 9, wherein the first video processing means removes noise from at least one of the main video signal and the sub video signal.

11. The video processing method according to claim 7, 8, 9, or 10, wherein the second video processing means adjusts resolution of the main video signal and the sub video signal to be displayed on the display.

12. The video processing method according to any of claims 7 to 11, wherein the video processing apparatus further comprises the display.
